# EUROPÄISCHE PATENTSCHRIFT

(11) **EP 1 290 645 B1**
(45) Veröffentlichungstag und Bekanntmachung des Hinweises auf die Patenterteilung: **08.06.2005**
(21) Anmeldenummer: 01945019.6
(22) Anmeldetag: 19.04.2001
(51) Int. Cl.: G07F 7/06

(54) **VERFAHREN UND SYSTEM ZUM ERFASSEN UND BELOHNEN DER RÜCKFÜHRUNG VON EINKAUFSWAGEN**
METHOD AND SYSTEM FOR DETECTING AND REWARDING THE RETURN OF SHOPPING TROLLEYS
PROCEDE ET SYSTEME POUR DETECTER ET RECOMPENSER LA REMISE EN PLACE DE CHARIOTS POUR MAGASINS

(30) Priorität: 20.04.2000 DE 10019941
(43) Veröffentlichungstag der Anmeldung: 12.03.2003
(73) Patentinhaber: systec POS-Technology GmbH, 82178 Puchheim (DE)
(72) Erfinder: WIETH, Franz, 82178 Puchheim (DE); SONNENDORFER, Horst, 82178 Puchheim (DE)
(86) Internationale Anmeldenummer: PCT/EP2001/004443
(87) Internationale Veröffentlichungsnummer: WO 2001/082239

(56) Entgegenhaltungen:
- EP-A- 0 247 632
- EP-A- 0 433 751
- EP-A- 0 643 372
- DE-A- 19 617 205
- DE-A- 19 722 609
- DE-U- 29 807 344

## Beschreibung

Die Erfindung betrifft ein Verfahren und ein System zum Erfassen und Belohnen der Rückführung von Einkaufswagen in die dafür vorgesehenen Sammelstellen eines Einkaufsmarktes nach dem Oberbegriff des Patentanspruchs 1 bzw. des Patentanspruchs 11.

Einkaufsmärkte zur Selbstbedienung und ähnliche Betriebe sind in aller Regel daran interessiert, dass die Kunden zum Einkauf einen Einkaufswagen benutzen. Hierfür werden die Einkaufswagen normalerweise in Sammelstellen bereitgehalten, aus denen der Kunde einen Wagen entnehmen und in den Einkaufsmarkt mitnehmen kann. Allerdings ist die Motivation der Kunden, den benutzten Einkaufswagen nach erfolgtem Einkauf wieder in die Sammelstelle zurückzubringen, erfahrungsgemäß sehr gering. Stattdessen werden die Einkaufswagen oft dort stehen gelassen, wo sie entladen wurden - normalerweise also mitten auf dem Parkplatz des Einkaufsmarktes. Hierdurch entstehen für den Einkaufsmarkt Mehrkosten, da Personal zum Einsammeln der stehengelassenen Einkaufswagen vorhanden sein muss. Außerdem besteht durch stehengelassene Einkaufswagen immer die Gefahr einer Beschädigung von geparkten Fahrzeugen.

Um den Kunden einen Anreiz zu geben, die benutzten Einkaufswagen in die Sammelstelle zurückzustellen, hat es sich durchgesetzt, die Einkaufswagen mit Pfandschlössern zu versehen. Hierdurch kann der Kunde nur dann einen Einkaufswagen aus der Sammelstelle entnehmen, wenn er eine Pfandmünze oder dergleichen im Pfandschloß festlegt. Diese Pfandmünze wird erst wieder freigeben, wenn der Einkaufswagen ordnungsgemäß in die Sammelstelle zurückgestellt wird. Neben dem für die Einkaufslaune des Kunden nachteiligen Ärger, der entsteht, wenn der Kunde keine Pfandmünze zur Hand hat, wird jedoch das Pfandschloßsystem je nach Kundenkreis als unangemessene Gängelung und Überregtementierung empfunden.

Zur Vermeidung dieser Nachteile des Pfandschloßsystems ist beispielsweise in der WO 98/51197 ein elektronisches System zum Erfassen und Belohnen der Rückführung von Einkaufswagen vorgeschlagen worden, bei dem jeder Einkaufswagen mit einer elektronischen Sende-Empfangs-Vorrichtung versehen ist. Mit deren Hilfe wird über Erfassungsmittel im Einkaufsmarkt, insbesondere an der Kasse, und an den Sammelstellen für die Einkaufswagen der Weg eines jeden Einkaufswagens nachvollzogen und abgespeichert. Eine zentrale Datenverarbeitungsvorrichtung erkennt, wenn ein Einkaufswagen die Kasse passiert hat und in der Sammelstelle angekommen ist, und gibt daraufhin einen Bonus in Form eines Gutscheins oder eines Teilnahmescheins an einer Lotterie aus. Dem gegenüber dem weit verbreiteten Pfandschloßsystem deutlich verbesserten Komfort für den Kunden steht allerdings eine Verschlechterung der Einkaufswagen-Rückführung gegenüber: Ein Pfandschloßsystem besteht in seinem Kern üblicherweise aus einem am Griff jedes Einkaufswagens angebrachten Pfandschloß mit anhängender Kette, wobei die Kette an ihrem freien Ende ein Betätigungselement für ein benachbartes Pfandschloß aufweist. Dieses Betätigungselement kann nur dann in ein benachbartes Pfandschloß eingesteckt und die dort festgelegte Pfandmünze freigeben werden, wenn die beiden betroffenen Einkaufswagen ordnungsgemäß ineinandergestapelt werden. Ein elektronisches Rückführsystem wie in der WO 98/51197 beschrieben kann jedoch systembedingt nicht sicherstellen, dass die Einkaufswagen nicht nur irgendwie in die Sammelstelle eingestellt, sondern ordnungsgemäß in einer Stapelreihe dort abgestellt werden.

Die DE 197 22 609 A zeigt ein Ordnungssystem für Einkaufswagen, bei dem sämtliche Einkaufswagen eines SB-Marktes mit Münzpfandschlössern ausgestattet sind, deren flexible Kopplungselemente (Kette-Schlüssel-Prinzip) auf den Mindestabstand von Einkaufswagen zu Einkaufswagen in Stapelposition bemessen sind, bei dem insoweit gewährleistet ist, dass systemkonformes Ankoppeln ausschliesslich dann gewährleistet ist, wenn die Münzpfandschlösser derart in der Breitenposition am Einkaufswagenhandgriff angeordnet sind, dass sie in Einkaufswagen-Reihenlängsachse liegen, also insoweit auf Mindest-Kopplungsabstand fixiert sind - andererseits ein derart ausgebildetes Münzpfandschloss an beliebiger Breitenposition am Einkaufswagenhandgriff fixiert werden kann und insoweit spezifische (individuelle) Einkaufswagentypen hergestellt sind und systemkonformes Ankoppeln nur bei identischen Typen oder Gruppen davon gewährleistet ist.

Ausgehend von diesem Stand der Technik liegt der vorliegenden Erfindung die Aufgabe zugrunde, ein System zum Erfassen und Belohnen der Rückführung von Einkaufswagen in die dafür vorgesehenen Sammelstellen eines Einkaufsmarktes der eingangs genannten Art so zu verbessern, dass die Vorteile des bekannten Pfandschloßsystems beibehalten werden.

Diese Aufgabe ist durch ein System mit den Merkmalen des beigefügten Patentanspruchs 1 sowie durch ein Verfahren mit den Merkmalen des beigefügten Patentanspruchs 11 gelöst.

Vorteilhafte Ausgestaltungen des Systems ergeben sich aus den Ansprüchen 2 bis 10; bevorzugte Weiterbildungen des Verfahrens sind in den Ansprüchen 12 bis 15 niedergelegt.

Das System nach der Erfindung umfasst also nicht nur eine Anzahl von Einkaufswagen, mindestens eine Sammelstelle und Erfassungsmittel zum Generieren eines Signals für die Ausgabe eines Bonus beim Zurückstellen eines Einkaufswagens in die Sammelstelle, sondern beinhaltet außerdem Erfassungsmittel, die erkennen, ob der zurückgestellte Einkaufswagen innerhalb einer vorgegebenen Toleranz in den in der Sammelstelle vor ihm stehenden Einkaufswagen eingeschoben oder in einem vorgegebenen Abstand zum Anfangspunkt einer Einkaufswagen-Stapelreihe abgestellt ist. Nur dann nämlich, wenn der Einkaufswagen ordnungsgemäß zurückgestellt, also in der Regel in die Stapelreihe eingeschoben wird, erhält der Kunde einen Bonus.

Hierbei ist es im übrigen nicht notwendig, dass mit dem zurückgestellten Einkaufswagen zuvor eingekauft wurde: Es kann erwünscht sein, einem Kunden auch dann einen Bonus einzuräumen, wenn er von Dritten stehengelassene Einkaufswagen "aufräumt".

Die erfindungsgemäßen Erfassungsmittel bestehen im wesentlichen aus einer digital bildverarbeitenden Kamera, die vorzugsweise oberhalb der in die Sammelstelle eingestellten Einkaufswagen angeordnet und derart programmiert ist, dass sie die Griffbügel der Einkaufswagen sowie deren Abstand und/oder deren Paralellität erkennt. Selbstverständlich sind auch andere. Anordnungen der Kamera denkbar, so zum Beispiel eine seitliche Anordnung, wobei gegebenenfalls besonders markierte seitliche Streben der Einkaufswagen erkannt werden. Eine entsprechend programmierte, handelsübliche CCD-Kamera kann diese Aufgaben ohne weiteres übernehmen.

Eine solche Kamera ist vorzugsweise so angeordnet, dass sie nur Einkaufswagen detektiert, die innerhalb der Sammelstelle abgestellt sind. So läßt sich ein Anreiz schaffen, dass die Kunden die Einkaufswagen gleichmäßig auf mehrere Sammelstellen verteilen. Dies beseitigt einen Schwachpunkt auch des herkömmlichen Pfandschloßsystems: Es ist verbreitet zu beobachten, dass Kunden, die ihr Fahrzeug auf einem Parkplatz abstellen, der vom Einkaufsmarkt entfernt ist, ihren Einkaufswagen einer dem Einkaufsmarkt nahe gelegenen Sammelstelle entnehmen, ihn nach dem Einkauf aber nicht wieder dorthin zurückbringen, sondern die dem Fahrzeug nächstgelegene Sammelstelle benutzen. Dies führt dazu, dass in regelmäßigen Abständen ganze Einkaufswagen-Stapelreihen von entfernt gelegenen Sammelstellen zu den nahe dem Einkaufsmarkt angeordneten Sammelstellen unter entsprechendem Personalaufwand verbracht werden müssen.

Wenn die Einkaufswagen jeweils mit einer auf optischem Wege identifizierbaren, individuellen Kennung (beispielsweise einem Barcode) versehen sind, kann sogar festgestellt werden, ob ein bestimmter Einkaufswagen an denselben Ort zurückgebracht wird, von dem er entnommen wurde. Die Identifizierung dieser individuellen Kennung kann ebenfalls über die obengenannte digital bildverarbeitende Kamera oder aber mit einer Art Laserscanner erfolgen.

Eine andere Möglichkeit, das erfindungsgemäße System zu realisieren, besteht darin, dass die Sammelstelle mit einem optischen Signalgeber, der vorzugsweise im Infrarotbereich arbeitet, versehen ist. Zugehörige Auswerteeinheiten können dabei jeweils an den Einkaufswagen angebracht sein; es ist aber auch möglich, dass die Einkaufswagen nur einen optischen Transponder - im einfachsten Fall einen Spiegel - aufweisen und das reflektierte Signal von einer gemeinsamen Auswerteeinheit detektiert wird. In beiden Fällen kann das Erkennen eines ordnungsgemäßen Einschiebens des Einkaufswagens in die Stapelreihe dadurch erfolgen, dass jeder Einkaufswagen mit einer Umlenkeinrichtung für das vom Signalgeber stammende Lichtsignal versehen ist, welche Umlenkeinrichtung das Lichtsignal von je einem Einkaufswagen auf den jeweils nachfolgenden Einkaufswagen richtet. Die Strecke zwischen zwei Einkaufswagen kann hierbei auf optischem Wege erfasst werden, was eindeutige Rückschlüsse darauf zuläßt, ob die Einkaufswagen ordnungsgemäß abgestellt, d. h. ineinander geschoben sind.

Eine vorteilhafte weitere Konkretisierung dieser Ausgestaltung des erfindungsgemäßen Systems besteht darin, dass die Erfassungsmittel eine Anzahl von an den Einkaufswagen angebrachten Auswerteeinheiten umfassen, welche beim Erhalt eines vom voranstehenden Einkaufswagen erhaltenen Lichtsignals des Signalgebers das Signal zur Ausgabe eines Bonus generieren. Diese Auswerteeinheiten sind vorzugsweise mit einem Lese-Schreib-Gerät versehen, wobei der Kunde eine Kundenkarte beim Zurückstellen des Einkaufswagens in dieses Lese-SchreibGerät einsteckt und das Signal zur Ausgabe eines Bonus auf der Karte vermerkt wird. Alternativ ist auch ein kontaktloses Übertragen des Signals von der Auswerteeinheit auf einen kundeneigenen Datenträger möglich, was den Bedienungskomfort erhöht und die Störanfälligkeit verbessert. Beim nächsten Einkauf wird dem Kunden bei Vorlage der Kundenkarte dieser Bonus dann gutgeschrieben. Der große Vorteil dieser Ausgestaltung ist die intuitive Bedienbarkeit und die Kontrollierbarkeit des Vorgangs durch den Kunden - beim Speichern eines Bonus in einer zentralen Datenverarbeitungsanlage des Einkaufsmarkts bleibt beim Kunden immer ein Mißtrauen, ob ihm der Bonus auch tatsächlich gutgeschrieben wird.

Der nach einer Weiterbildung des erfindungsgemäßen Systems vorhandene optische Signalgeber kann beispielsweise ein Laser sein; besondere Vorteile ergeben sich jedoch dann, wenn auf die gewöhnliche Beleuchtungseinrichtung der Sammelstelle ein Lichtsignal aufmoduliert wird. Separate Installationen mit entsprechendem Wartungsaufwand können dann entfallen.

Ein Ausführungsbeispiel für die Erfindung wird im folgenden anhand der beigefügten Zeichnungen näher beschrieben und erläutert. Es zeigen:
- Figur 1: eine schematische Seitenansicht einer Sammelstelle mit einer Einkaufswagen-Stapelreihe;
- Figur 2: eine schematische Detaildarstellung eines Einkaufswagengriffs.

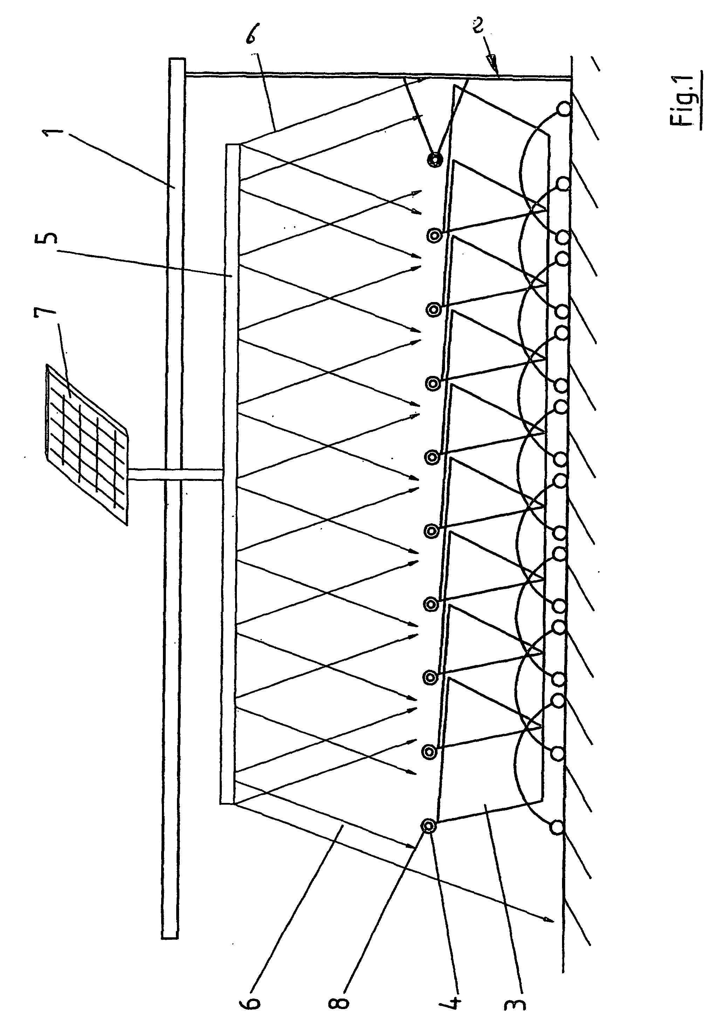

Figur 1 zeigt schematisch eine im Freien vor dem (nicht dargestellten) Einkaufsmarkt angeordnete Sammelstelle 1, in der eine Stapelreihe 2 von Einkaufswagen 3 untergebracht ist. Die Sammelstelle 1 ist von der links dargestellten Seite her für die Kunden zugänglich. Die Darstellung verdeutlicht, dass die Einhaltung des vorgegebenen Stapelabstandes der einzelnen Einkaufswagen 3 in der Stapelreihe 2 anhand der Griffe 4 der Einkaufswagen 3 leicht überwacht werden kann, da diese ein charakteristisches optisches Muster bilden.

Ein oberhalb der Stapelreihe 2 angeordneter optischer Signalgeber 5 sendet Lichtsignale 6 in den Bereich der Stapelreihe 2, um ein Generieren des Signals zur Ausgabe eines Bonus zu ermöglichen. An der links dargestellten offenen Seite der Sammelstelle 1 ist verdeutlicht, dass der Abstrahlwinkel der Lichtsignale 6 so gewählt ist, dass der Griff 4 eines Einkaufswagens 3, der nicht vollständig in die Sammelstelle 1 eingeschoben wurde, von den Lichtsignalen 6 nicht mehr erreicht wird: Das Signal zur Ausgabe eines Bonus kann also überhaupt nur dann generiert werden, wenn der betreffende Einkaufswagen 3 vollständig innerhalb der Sammelstelle 1 abgestellt wird. Da der Signalgeber 5 eine Stromversorgung benötigt, ist im vorliegend dargestellten Ausführungsbeispiel ein Solarmodul 7 zur Stromversorgung vorgesehen.

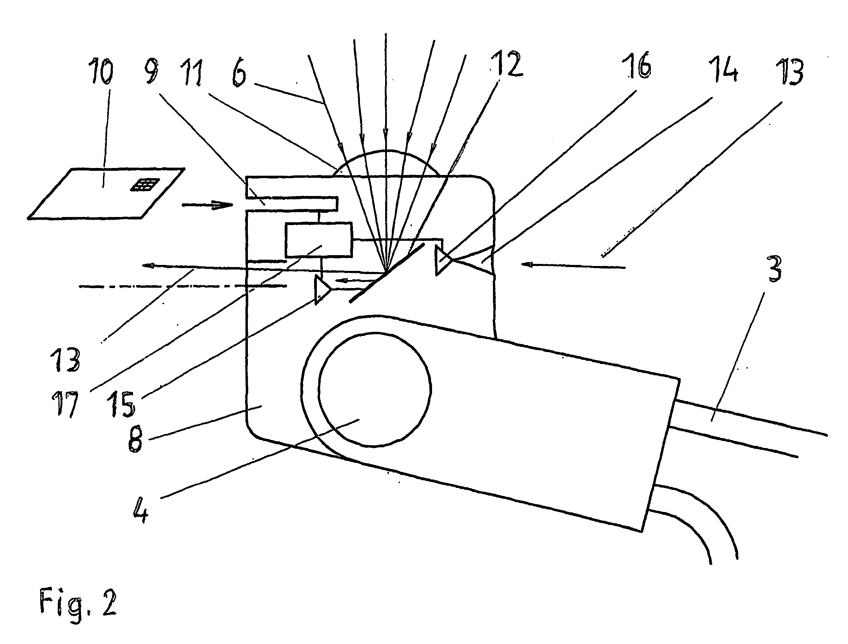

Die Einkaufswagen 3 des vorliegenden Ausführungsbeispiels sind jeweils im Bereich Ihrer Griffe 4 mit einer elektronischen Auswerteeinheit 8 versehen, welche die Lichtsignale 6 auffängt, detektiert und zum jeweils nachfolgenden Einkaufswagen 3 bzw. dessen Auswerteeinheit 8 weiterleitet. Dies ist in Figur 2 dargestellt.

Die in Figur 2 näher gezeigte Auswerteeinheit 8, die am Griff 4 eines Einkaufswagens 3 befestigt ist, umfasst ein Lese-Schreib-Gerät 9 zur Aufnahme einer Kundenkarte 10, auf der das Signal zur Ausgabe eines Bonus abgespeichert wird. Der Kunde muss also zumindest beim Zurückstellen des Einkaufswagens 3 in die Sammelstelle 1 seine Kundenkarte 10 in das Lese-Schreib-Gerät 9 der Auswerteeinheit 8 einstecken. Ein erster Empfänger 11, der vorzugsweise mit einer Sammellinse versehen ist, erhält die Lichtsignale 6 des Signalgebers 5 und lenkt diese über einen Spiegel 12 als umgelenktes Lichtsignal 13 an den nachfolgenden Empfänger 8 des unmittelbar nachfolgenden Einkaufswagens 3 um. Diese nachfolgende Auswerteeinheit ist wie die dargestellte Auswerteeinheit 8 mit einem frontseitigen zweiten Empfänger 14 zum Empfang des umgelenkten Lichtsignals 13 versehen. Eine leichte Neigung des umgelenkten Lichtsignals 13 gegen die Horizontale stellt sicher, dass der zweite Empfänger 14 das ungelenkte Lichtsignal 13 nur bei einem vorbestimmten Abstand zwischen den beiden beteiligten Einkaufswagen 3 empfangen kann. Die Auswerteeinheit 8 enthält außerdem eine dem ersten Empfänger 11 zugeordnete erste Photodiode 15 und eine dem zweiten Empfänger 14 zugeordnete zweite Photodiode 16, die die aufgefangenen Lichtsignale jeweils als elektrische Signale an eine Auswerteelektronik 17 weitergeben. Die Auswerteeleketronik 17 stellt einen Zusammenhang der beiden von den Photodioden 15 und 16 gelieferten elektrischen Signale her und beschreibt den von der Kundenkarte 10 befindlichen elektronischen Speicher mit dem Signal zur Ausgabe eines Bonus.

Selbstverständlich ist es auch möglich, das Lichtsignal 6 nicht von dem jeweils voranstehenden Einkaufswagen 3 zum jeweils nachfolgenden Einkaufswagen 3 umzulenken, sondern in umgekehrter Weise die Umlenkung in der Auswerteeinheit 8 des nachfolgenden Einkaufswagens 3 vorzunehmen, das nach vorne umgelenkte Lichtsignal 13 am davorstehenden Einkaufswagen 3 zu reflektieren und dann am nachfolgenden Einkaufswagen 3. zu detektieren, um das Signal zur Ausgabe eines Bonus zu generieren.

### Bezugszeichenliste

- 1: Sammelstelle
- 2: Stapelreihe
- 3: Einkaufswagen
- 4: Griff (von 3)
- 5: Signalgeber
- 6: Lichtsignal
- 7: Solarmodul
- 8: Auswerteeinheit
- 9: Lese-Schreib-Gerät
- 10: Kundenkarte
- 11: Empfänger (erster)
- 12: Spiegel
- 13: umgelenktes Lichtsignal
- 14: Empfänger (zweiter)
- 15: Photodiode (erste)
- 16: Photodiode (zweite)
- 17: Auswerteelektronik

## Patentansprüche

1. System zum Erfassen und Belohnen der Rückführung von Einkaufswagen in die dafür vorgesehenen sammelstellen eines Einkaufsmarktes,
mit einer Anzahl von Einkaufswagen (3), mit mindestens einer Sammelstelle (1) für Einkaufswagen und mit Erfassungsmitteln (5, 6, 8, 10) zum Generieren eines Signals für die Ausgabe eines Bonus beim zurückstellen eines Einkaufswagens (3) in die Sammelstelle (1),
**dadurch gekennzeichnet, dass**
die Erfassungsmittel (5, 6, 8, 10) so ausgestaltet sind, dass sie erkennen, ob der zurückgestellte Einkaufswagen (3) innerhalb einer vorgegebenen Toleranz in die in der Sammelstelle (1) vorgesehene Einkaufswagen-Stapelreihe (2) eingestellt ist und
die Erfassungsmittel eine digital bildverarbeitende Kamera umfassen.

2. System nach Anspruch 1,
**dadurch gekennzeichnet, dass**
die Kamera oberhalb der Stapelreihe (2) der in die Sammelstelle (1) eingestellten Einkaufswagen (3) angeordnet und derart programmiert ist, dass sie die Griffbügel der Einkaufswagen (3) sowie deren Abstand und/oder Parallelität erkennt.

3. System nach einem der Ansprüche 1 oder 2,
**dadurch gekennzeichnet, dass**
die Kamera so angeordnet ist, dass sie nur Einkaufswagen (3) detektiert, die innerhalb der Sammelstelle (1) abgestellt sind.

4. System nach einem der Ansprüche 1 bis 3,
**dadurch gekennzeichnet, dass**
jeder Einkaufswagen (3) mit einer auf optischem Wege identifizierbaren, individuellen Kennung versehen ist.

5. System nach einem der Ansprüche 1 bis 4,
**dadurch gekennzeichnet, dass**
die sammelstelle (7) mit einem vorzugsweise im IR-Bereich arbeitenden, optischen Signalgeber (5) versehen ist.

6. System nach Anspruch 5,
**dadurch gekennzeichnet, dass**
jeder Einkaufswagen (3) mit einer umlenkeinrichtung (11, 12) für das vom signalgeber (5) stammende Lichtsignal (6) versehen ist, mit welcher das Lichtsignal (6) von je einem Einkaufswagen (3) auf den jeweils unmittelbar benachbarten Einkaufswagen (3) richtbar ist.

7. System nach den Ansprüchen 5 und 6,
**dadurch gekennzeichnet, dass**
die Erfassungsmittel eine Anzahl von an den Einkaufswagen (3) angebrachten Auswerteeinheiten (8) umfassen, welche beim Erhalt eines vom voranstehenden Einkaufswagen (3) erhaltenen, umgelenkten Lichtsignals (13) das Signal zur Ausgabe eines Bonus generieren.

8. System nach Anspruch 7,
**dadurch gekennzeichnet, dass**
die Auswerteeinheiten (8) so ausgestaltet sind, dass sie das Signal zur Ausgabe eines Bonus auf einen kundeneigenen Datenträger übertragen.

9. System nach Anspruch 8,
**dadurch gekennzeichnet, dass**
die Auswerteeinheiten (8) jeweils mit einem Lese-schreib-Gerät (9) versehen sind, mittels welchem das signal zur Ausgabe eines Bonus auf eine Kundenkarte (10) speicherbar ist.

10. System nach einem der Ansprüche 5 bis 9,
**dadurch gekennzeichnet,dass**
der optische Signalgeber (5) durch eine gewöhnliche Beleuchtungseinrichtung mit aufmoduliertem Lichtsignal (6) gebildet ist.

11. Verfahren zum Erfassen und Belohnen der Rückführung von Einkaufswagen in die dafür vorgesehenen sammelstellen eines Einkaufsmarktes, wobei beim Zurückstellen eines Einkaufswagens in eine sammelstelle ein Signal zur Ausgabe eines Bonus generiert wird,
**dadurch gekennzeichnet,dass** das Signal zur Ausgabe eines Bonus nur dann generiert
wird, wenn der zurückgestellte Einkaufswagen innerhalb einer vorgegebenen Toleranz
in eine in der Sammelstelle vorgesehene Einkaufswagen-stapelreihe eingestellt wird
und dass hierzu eine digital bildverarbeitende Kamera verwendet wird.

12. Verfahren nach Anspruche 11,
**dadurch gekennzeichnet, dass**
auf jeden Einkaufswagen eine auf optischem Wege identifizierbare, individuelle Kennung aufgebracht wird.

13. Verfahren nach einem der Ansprüche 11 bis 12,
**dadurch gekennzeichnet, dass**
ein im Bereich der sammelstelle verfügbares optisches signal das Generieren des Signals zur Ausgabe eines Bonus auslöst.

14. Verfahren nach Anspruch 13,
**dadurch gekennzeichnet, dass**
das optische Signal der gewöhnlichen Beleuchtungseinrichtung der Sammelstelle aufmoduliert wird.

15. Verfahren nach einem der Ansprüche 11 bis 14,
**dadurch gekennzeichnet, dass**
das Signal zur Ausgabe eines Bonus auf einem Datenträger des Kunden gespeichert wird.

## Claims

1. System for recording and repayment for the return of shopping trolleys to the shopping centre collection points provided for this purpose,
having a number of shopping trolleys (3), having at least one collection point (1) for shopping trolleys and having recording means (5, 6, 8, 10) for generation of a signal for the issue of a bonus when a shopping trolley (3) is returned to the collection point (1),
**characterized in that**
the recording means (5, 6, 8, 10) are designed such that they identify whether the returned shopping trolley (3) has been positioned within a predetermined tolerance in the shopping trolley stacking row (2) provided at the collection point (1), and
the recording means are in the form of a digitally image-processing camera.

2. System according to Claim 1,
**characterized in that**
the camera is arranged above the stacking row (2) of the shopping trolleys (3) which have been positioned at the collection point (1) and is programmed such that it identifies the handles of the shopping trolleys (3) as well as their separation and/or parallelity.

3. System according to one of Claims 1 or 2,
**characterized in that**
the camera is arranged such that it detects only shopping trolleys (3) which have been parked within the collection point (1).

4. System according to one of Claims 1 to 3,
**characterized in that**
each shopping trolley (3) is provided with an individual identification which can be identified by optical means.

5. System according to one of Claims 1 to 4,
**characterized in that**
the collection point (7) is provided with an optical signal transmitter (5), which preferably operates in the IR band.

6. System according to Claim 5,
**characterized in that**
each shopping trolley (3) is provided with a direction-changing device (11, 12) for the light signal (6) originating from the signal transmitter (5), by means of which the light signal (6) can be directed from a respective shopping trolley (3) to the respectively immediately adjacent shopping trolley (3).

7. System according to Claims 5 and 6,
**characterized in that**
the recording means comprise a number of evaluation units (8) which are fitted to the shopping trolley (3) and generate the signal to issue a bonus on receiving a light signal (13) whose direction has been changed and which is received from the preceding shopping trolley (3).

8. System according to Claim 7,
**characterized in that**
the evaluation units (8) are designed such that they transmit the signal to issue a bonus to the customer's own data storage medium.

9. System according to Claim 8,
**characterized in that**
each of the evaluation units (8) is provided with a reader/writer (9) by means of which the signal to issue a bonus can be stored on a customer card (10).

10. System according to one of Claims 5 to 9,
**characterized in that**
the optical signal transmitter (5) is formed by a normal illumination device with a light signal (6) modulated onto it.

11. Method for recording and repayment for the return of shopping trolleys to the shopping centre collection points provided for this purpose, in which case a signal to issue a bonus is generated when a shopping trolley is returned,
**characterized in that**
the signal to issue a bonus is generated only when the returned shopping trolley is positioned within a predetermined tolerance in a shopping trolley stacking row provided at the collection point,
and **in that** a digitally image-processing camera is used for this purpose.

12. Method according to Claim 11,
**characterized in that**
each shopping trolley is provided with an individual identification which can be identified by optical means.

13. Method according to one of Claims 11 or 12,
**characterized in that**
an optical signal which is available in the area of the collection point initiates the generation of the signal to issue a bonus.

14. Method according to Claim 13,
**characterized in that**
the optical signal is modulated onto the normal illumination device at the collection point.

15. Method according to one of Claims 11 to 14,
**characterized in that**
the signal to issue a bonus is stored on the customer's data storage medium.

## Revendications

1. Système de détection et de récompense du retour de chariots aux points de collecte prévus à cet effet d'un supermarché, comprenant un certain nombre de chariots (3), comprenant au moins un point de collecte (1) pour les chariots et comprenant des moyens de détection (5, 6, 8, 10) destinés à générer un signal pour la remise d'un bonus lors du retour d'un chariot (3) au point de collecte (1), **caractérisé en ce que** les moyens de détection (5, 6, 8, 10) sont configurés de telle sorte qu'ils détectent si le chariot (3) retourné est placé avec une tolérance prédéfinie dans la rangée d'alignement de chariots (2) prévue au point de collecte (1) et les moyens de détection comprennent une caméra à traitement numérique des images.

2. Système selon la revendication 1, **caractérisé en ce que** la caméra est disposée au-dessus de la rangée d'alignement (2) des chariots (3) déposés au point de collecte (1) et programmée de telle sorte qu'elle reconnaît les poignées des chariots (3) ainsi que leur espacement et/ou leur parallélisme.

3. Système selon la revendication 1 ou 2, **caractérisé en ce que** la caméra est disposée de telle sorte qu'elle ne détecte que les chariots (3) qui sont déposés à l'intérieur du point de collecte (1).

4. Système selon l'une des revendications 1 à 3, **caractérisé en ce que** chaque chariot (3) est muni d'un identifiant individuel pouvant être identifié de manière optique.

5. Système selon l'une des revendications 1 à 4, **caractérisé en ce que** le point de collecte (7) est muni d'un générateur de signal optique (5) fonctionnant de préférence dans la gamme des infrarouges.

6. Système selon la revendication 5, **caractérisé en ce que** chaque chariot (3) est muni d'un dispositif de déviation (11, 12) pour le signal lumineux (6) issu du générateur de signal (5) avec lequel le signal lumineux (6) peut à chaque fois être dévié d'un chariot (3) sur le chariot (3) directement voisin.

7. Système selon l'une des revendications 5 et 6, **caractérisé en ce que** les moyens de détection comprennent un certain nombre d'unités d'évaluation (8) montées sur les chariots (3) qui génèrent le signal de remise d'un bonus lorsqu'elles reçoivent un signal lumineux (13) dévié reçu par le chariot (3) qui se trouve à l'avant.

8. Système selon la revendication 7, **caractérisé en ce que** les unités d'évaluation (8) sont configurées de telle sorte qu'elles transmettent le signal de remise d'un bonus à un support de données propre au client.

9. Système selon la revendication 8, **caractérisé en ce que** les unités d'évaluation (8) sont à chaque fois munies d'un appareil de lecture et d'écriture (9) au moyen duquel le signal de remise du bonus peut être enregistré sur une carte du client (10).

10. Système selon l'une des revendications 5 à 9, **caractérisé en ce que** le générateur de signal optique (5) est formé par un dispositif d'éclairage courant sur lequel est modulé un signal lumineux (6).

11. Procédé de détection et de récompense du retour de chariots aux points de collecte prévus à cet effet d'un supermarché, un signal pour la remise d'un bonus étant généré lors du retour d'un chariot au point de collecte, **caractérisé en ce que** le signal pour la remise d'un bonus n'est généré que si le chariot retourné est placé avec une tolérance prédéfinie dans une rangée d'alignement de chariots prévue au point de collecte et qu'une caméra à traitement numérique des images est prévue à cet effet.

12. Procédé selon la revendication 11, **caractérisé en ce qu'**un identifiant individuel pouvant être identifié de manière optique est placé sur chaque chariot.

13. Procédé selon l'une des revendications 11 à 12, **caractérisé en ce qu'**un signal optique disponible dans la zone du point de collecte déclenche la génération du signal pour la remise d'un bonus.

14. Procédé selon la revendication 13, **caractérisé en ce que** le signal optique est superposé par modulation au dispositif d'éclairage habituel du point de collecte.

15. Procédé selon l'une des revendications 11 à 14, **caractérisé en ce que** le signal de remise d'un bonus est enregistré sur un support de données du client.
